# EUROPÄISCHE PATENTSCHRIFT

(11) **EP 1 780 442 B1**
(45) Veröffentlichungstag und Bekanntmachung des Hinweises auf die Patenterteilung: **20.04.2011**
(21) Anmeldenummer: 06020655.4
(22) Anmeldetag: 30.09.2006
(51) Int. Cl.: F16F 15/131

(54) **Drehschwingungsdämpfungseinrichtung**
Torsional vibration damper
Amortisseur de vibrations torsionelles

(30) Priorität: 29.10.2005 DE 102005051870
(43) Veröffentlichungstag der Anmeldung: 02.05.2007
(73) Patentinhaber: Schaeffler Technologies GmbH & Co. KG, 91074 Herzogenaurach (DE)
(72) Erfinder: Hämisch, Stephan, 77830 Bühlertal (DE); Jäckel, Johann, 77830 Bühlertal (DE)

(56) Entgegenhaltungen:
- EP-A- 1 566 566
- DE-A1- 10 201 416
- DE-A1- 19 739 517

## Beschreibung

Die Erfindung betrifft eine Drehschwingungsdämpfungseinrichtung, insbesondere ein geteiltes Schwungrad, mit einer primären Schwungmasse, die drehfest mit der Abtriebswelle einer Antriebseinheit, insbesondere einer Brennkraftmaschine, verbindbar ist, und einer sekundären Schwungmasse, die gegen den Widerstand einer ersten Energiespeichereinrichtung und einer zweiten Energiespeichereinrichtung, die eine als Schnappfeder ausgebildete Tellerfedereinrichtung umfasst, die in Abhängigkeit von der Drehzahl und der Drehrichtung der Schwungmassen eine zu der ersten Energiespeichereinrichtung inverse Wirkung entfaltet, relativ zu der primären Schwungmasse verdrehbar ist, wobei an der Tellerfedereinrichtung mindestens ein Kopplungselement angebracht ist, das in axialer Richtung zwischen zwei Anlageflächen von Reibelementen angeordnet ist, die durch das Kopplungselement in axialer Richtung beaufschlagbar sind.

Eine solche Einrichtung ist zum Beispiel aus der EP 1 566 566 A1 bekannt.

Aufgabe der Erfindung ist es, eine Drehschwingungsdämpfungseinrichtung gemäß dem Oberbegriff des Anspruchs 1 zu schaffen, die es ermöglicht, im Betrieb der Brennkraftmaschine auftretende Ungleichförmigkeiten schwingungstechnisch zu isolieren.

Die Aufgabe ist bei einer solchen Drehschwingungsdämpfungseinrichtung, dadurch gelöst, dass die Anlageflächen für das Kopplungselement von Rampen gebildet werden, die an den Reibelementen vorgesehen und, bezogen auf die Umfangsrichtung, schräg angeordnet sind, wobei die Reibelemente durch mindestens eine Federeinrichtung in Umfangsrichtung gegeneinander vorgespannt sind. Die Drehschwingungsdämpfungseinrichtung wird auch als Torsionsschwingungsdämpfer bezeichnet. Das Kopplungselement kann einstückig mit der Tellerfedereinrichtung ausgebildet sein. Der Begriff axial bezieht sich auf die Drehachse der Schwungmassen der Drehschwingungsdämpfungseinrichtung. Axial bedeutet in Richtung oder parallel zu der Drehachse. Die Tellerfedereinrichtung ist aus einer Neutralstellung, in der die Tellerfedereinrichtung keine Kraft über das Kopplungselement auf die Reibelemente ausübt, in axialer Richtung auslenkbar. Wenn die Tellerfedereinrichtung ausgelenkt wird, dann nimmt die von der Tellerfedereinrichtung über das Kopplungselement auf das zugehörige Reibelement ausgeübte Kraft zu.

Der Begriff Umfangsrichtung bezieht sich auf die Schwungmassen der Drehschwingungsdämpfungseinrichtung. Die Rampen führen dazu, dass die Tellerfedereinrichtung ausgelenkt wird, wenn die beiden Schwungmassen im Zug- oder Schubbetrieb der Brennkraftmaschine relativ zueinander verdreht werden.

Bei der Federeinrichtung handelt es sich vorzugsweise um eine Schraubendruckfeder. Die Federeinrichtung dient unter anderem dazu, Einbautoleranzen auszugleichen.

Ein bevorzugtes Ausführungsbeispiel der Drehschwingungsdämpfungseinrichtung ist dadurch gekennzeichnet, dass die Anlageflächen für das Kopplungselement in Umfangsrichtung jeweils von einer Nase begrenzt werden, die von der zugehörigen Anlagefläche absteht. Der Begriff Umfangsrichtung bezieht sich auf die Schwungmassen der Drehschwingungsdämpfungseinrichtung. Die Nase erstreckt sich im Wesentlichen in axialer Richtung und bildet einen Anschlag für das Kopplungselement.

Ein weiteres bevorzugtes Ausführungsbeispiel der Drehschwingungsdämpfungseinrichtung ist dadurch gekennzeichnet, dass die resultierende Vorspannkraft der Federeinrichtung eine Wirkungslinie aufweist, die, bezogen auf die Umfangsrichtung, schräg angeordnet ist. Dadurch wirkt die Vorspannkraft der Federeinrichtung sowohl in axialer Richtung als auch in Umfangsrichtung.

Ein weiteres bevorzugtes Ausführungsbeispiel der Drehschwingungsdämpfungseinrichtung ist dadurch gekennzeichnet, dass die Tellerfedereinrichtung mindestens eine Tellerfeder umfasst, an der mehrere Kopplungselemente angebracht sind, die gleichmäßig über den Umfang der Tellerfeder verteilt sind. Vorzugsweise sind an der Tellerfeder drei Kopplungselemente angebracht.

Ein weiteres bevorzugtes Ausführungsbeispiel der Drehschwingungsdämpfungseinrichtung ist dadurch gekennzeichnet, das jedem Kopplungselement ein Paar Reibelemente zugeordnet sind. Vorzugsweise sind jedem Paar Reibelemente jeweils eine Federeinrichtung und jeweils ein Kopplungselement zugeordnet.

Ein weiteres bevorzugtes Ausführungsbeispiel der Drehschwingungsdämpfungseinrichtung ist dadurch gekennzeichnet, dass die Auslenkung der Tellerfeder in axialer Richtung von zwei Gegenscheiben begrenzt ist, die in axialer Richtung voneinander beabstandet sind. Dadurch wird ein Durchrutschen der Reibelemente ermöglicht, sobald ein vorgegebener Drehwinkelbereich überschritten wird.

Ein weiteres bevorzugtes Ausführungsbeispiel der Drehschwingungsdämpfungseinrichtung ist dadurch gekennzeichnet, dass die Reibelemente innerhalb eines Aufnahmeabschnitts angeordnet sind, der an der Primärschwungmasse ausgebildet ist und einen im Wesentlichen U-förmigen Querschnitt aufweist. Der Aufnahmeabschnitt wird vorzugsweise von Blechteilen gebildet.

Ein weiteres bevorzugtes Ausführungsbeispiel der Drehschwingungsdämpfungseinrichtung ist dadurch gekennzeichnet, dass die zweite Energiespeichereinrichtung so mit den beiden Schwungmassen koppelbar ist, dass die zweite Energiespeichereinrichtung nur bei kleinen Verdrehwinkeln, insbesondere von 1 Grad bis 10 Grad, und nicht bei großen Verdrehwinkeln, insbesondere von mehr als 10 Grad, eine degressive Wirkung entfaltet. Die beiden Schwungmassen sind mit Hilfe einer Lagereinrichtung relativ zueinander verdrehbar. Die beiden Energiespeichereinrichtungen dienen dazu, im Betrieb der Brennkraftmaschine auftretende, oszillierende Schwingungen nicht auf die Sekundärschwungmasse zu übertragen, die drehfest mit mindestens einer Getriebeeingangswelle verbunden sein kann. Der Verdrehwinkel, bis zu dem die zweite Energiespeichereinrichtung ihre degressive Wirkung entfaltet, wird auch als Freiwinkel bezeichnet, und beträgt vorzugsweise 1 Grad bis 10 Grad, insbesondere 6 Grad. Die degressive Wirkung der zweiten Energiespeichereinrichtung ist so mit der Wirkung der ersten Energiespeichereinrichtung abgestimmt, dass die Wirkung der ersten Energiespeichereinrichtung nahezu kompensiert wird.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
Figur 1 einen Halbschnitt durch eine erfindungsgemäße Drehschwingungsdämpfungseinrichtung;
Figur 2 einen Ausschnitt aus Figur 1, in der sich eine Tellerfeder in ihrer Neutralstellung befindet;
Figur 3 den gleichen Ausschnitt wie in Figur 2, wobei die Tellerfeder ausgelenkt ist;
Figur 4 den gleichen Ausschnitt wie in den Figuren 2 und 3, wobei die Tellerfeder an einer Gegenscheibe anliegt;
Figur 5 die Darstellung eines Schnitts in Umfangsrichtung, wobei sich die Tellerfeder in ihrer Neutralstellung befindet;
Figur 6 eine ähnliche Ansicht wie in Figur 5, wobei die Tellerfeder ausgelenkt ist;
Figur 7 eine ähnliche Ansicht wie in Figur 5, wobei sich ein Reibsegment in Umfangsrichtung verschiebt;
Figur 8 die Darstellung eines weiteren Schnitts in Umfangsrichtung.

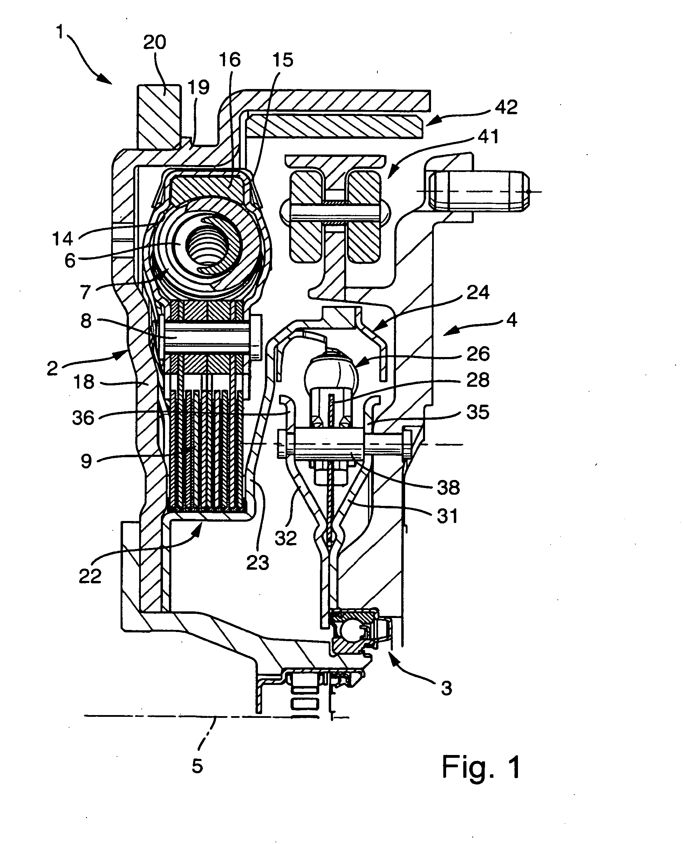

In Figur 1 ist eine Drehschwingungsdämpfungseinrichtung 1 im Halbschnitt dargestellt. Bei der Drehschwingungsdämpfungseinrichtung 1, die auch als Torsionsschwingungsdämpfer bezeichnet wird, handelt es sich um ein Zweimassenschwungrad. Das Zweimassenschwungrad umfasst eine an einer Kurbelwelle einer Brennkraftmaschine eines Kraftfahrzeugs befestigbare Primärschwungmasse oder Primärmasse 2, die auch als Eingangsteil bezeichnet wird. An der Primärschwungmasse 2 ist mittels eines Lagers 3, zum Beispiel eines Wälzlagers, eine Sekundärschwungmasse oder Sekundärmasse 4 koaxial und verdrehbar um eine Drehachse 5 gelagert. Die Sekundärschwungmasse 4 ist drehfest an einem (nicht dargestellten) Eingangsteil einer Kupplungseinrichtung befestigbar.

Die Primärmasse 2 ist mit der Sekundärmasse 4 über eine kombinierbare Energiespeicher 6 aufweisende Dämpfungseinrichtung 7, die auch als erste Energiespeichereinrichtung bezeichnet wird, antriebsmäßig verbunden. Die Energiespeicher 6, hier in Form von in Umfangsrichtung länglichen Schraubenfedern mit großem Kompressionsweg, sind über Nietverbindungselemente 8 mit einem Reiblamellenpaket 9 gekoppelt. Die Schraubenfedern, die auch als Bogenfedern bezeichnet werden, sind in einer Kammer 14 aufgenommen, die zumindest teilweise mit einem viskosen Medium gefüllt sein kann. Die Kammer 14 ist durch ein Blechteil 15 begrenzt, das auch als Bügel bezeichnet wird. Radial außen ist zwischen der Bogenfeder 6 und dem Blechteil 15 ein Kunststoffteil 16 angeordnet.

Die Primärschwungmasse 2 weist einen radial verlaufenden Bereich 18 auf, von dem radial außen ein axialer Ansatz 19 ausgeht. Der radial verlaufende Bereich 18 wird auch als Eingangsteil des Torsionsschwingungsdämpfers 1 bezeichnet. An dem axialen Ansatz 19 ist radial außen ein Anlasserzahnkranz 20 befestigt. Radial innen ist an dem radial verlaufenden Bereich 18 ein Verbindungselement 22 befestigt. Bei dem Verbindungselement 22 handelt es sich um ein Blechteil 23, das radial außen einen Aufnahmeabschnitt 24 mit einem U-förmigen Querschnitt aufweist, der radial nach innen geöffnet ist. In dem Aufnahmeabschnitt 24 ist ein Kopplungselement 26 angeordnet, dass radial außen an einer Tellerfeder 28 angebracht ist. Die Tellerfeder 28 ist radial innen zwischen zwei Gegenscheiben 31, 32 eingeklemmt, die sich radial nach außen, im Schnitt betrachtet, V-förmig erweitern und in Anlageabschnitte 35, 36 übergehen. Die Anlageabschnitte 35, 36 sind parallel zueinander angeordnet. Im Bereich der Anlageabschnitte 35, 36 sind die Gegenscheiben 31, 32 mit Hilfe eines Stufennietelements 38 an der Sekundärschwungmasse 4 abgestützt. Radial außerhalb des Aufnahmeabschnitts 24 ist die Drehschwingungsdämpfungseinrichtung 1 mit einer Fliehkraftpendeleinrichtung 41 und einer Fliehkraftkupplungseinrichtung 42 ausgestattet.

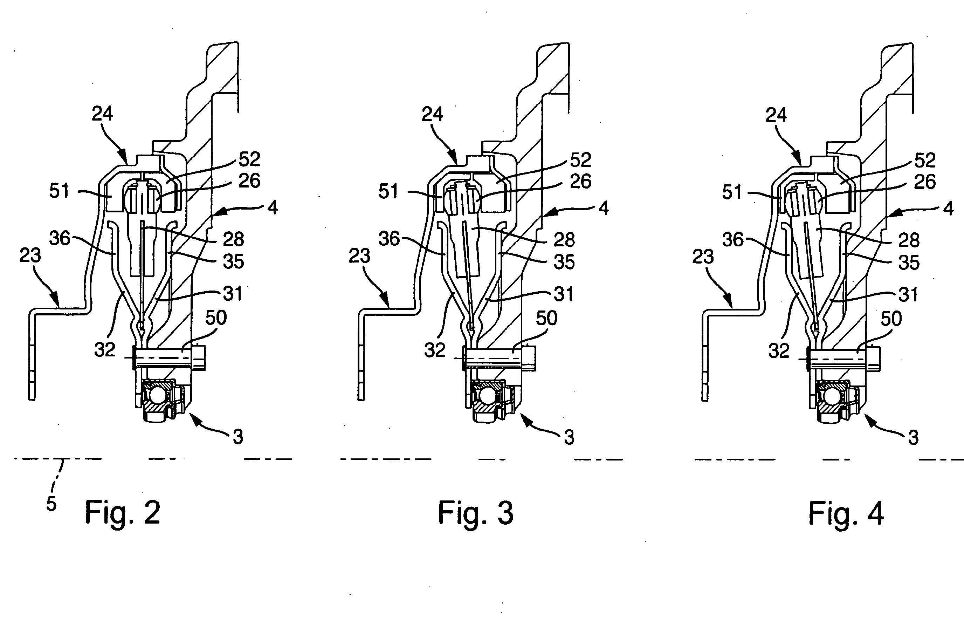

In den Figuren 2 bis 4 ist ein Ausschnitt aus Figur 1 in verschiedenen Auslenkungszuständen der Tellerfeder 28 dargestellt. In der in den Figuren 2 bis 4 dargestellten Schnittansicht sieht man, dass die Gegenscheiben 31, 32 radial innen mit Hilfe von mindestens einem Nietverbindungselement 50 an der Sekundärschwungmasse 4 befestigt sind.

In Figur 2 befindet sich die Tellerfeder 28 in ihrer Neutralstellung. Das Kopplungselement 26 ist in axialer Richtung zwischen zwei Reibungselementen 51, 52, die auch als Reibelemente bezeichnet werden, angeordnet. Bei der Tellerfeder 28 handelt es sich um eine Schnappfeder.

In ihrer Neutralstellung, die auch als Nullstellung bezeichnet wird, wird durch die Tellerfeder 28 keine Kraft auf die Reibelemente 51, 52 aufgebracht.

In Figur 3 ist die Tellerfeder 28 im ausgelenkten Zustand dargestellt. Die Auslenkung der Tellerfeder 28 erfolgt durch das Kopplungselement 26. Da es sich bei der Tellerfeder 28 um eine Schnappfeder handelt, nimmt die Tellerfederkraft im ausgelenkten Zustand zu. Durch die ausgelenkte Tellerfeder 28 wird das Reibelement 51 im Bereich des Aufnahmeabschnitts 24 gegen das Blechteil 23 gedrückt.

In Figur 4 liegt die Tellerfeder 28 beziehungsweise das Kopplungselement 26 an dem Anlageabschnitt 36 der Gegenscheibe 32 an. Demzufolge bringt die Tellerfeder 28 keine Axialkraft mehr auf das Reibelement 51 auf, das auch als Reibsegment bezeichnet wird. Die Reibelemente 51, 52 können in Umfangsrichtung durchgeschoben werden.

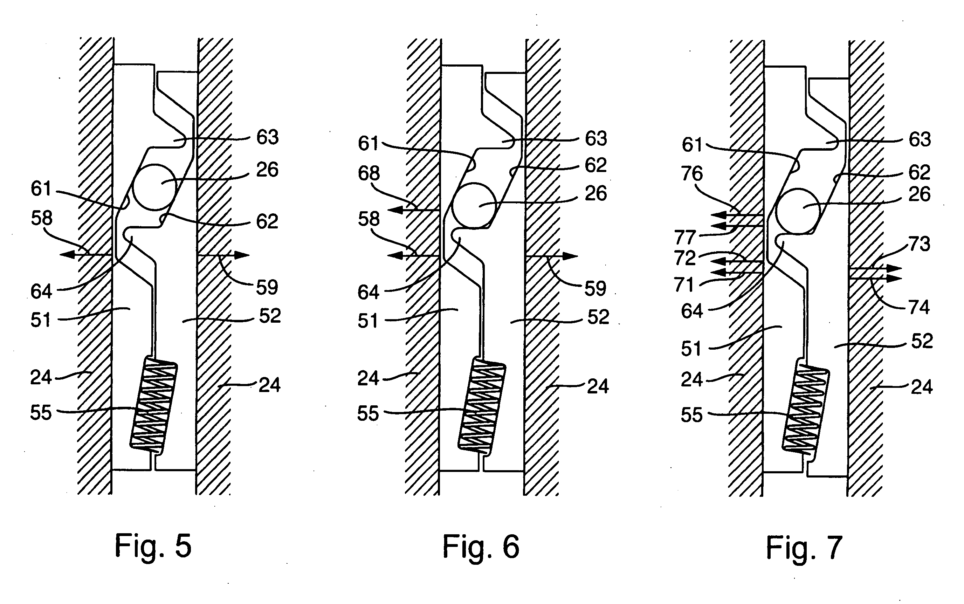

In den Figuren 5 bis 7 sind Schnitte in Umfangsrichtung dargestellt, wobei die Auslenkung der Tellerfeder beziehungsweise des Kopplungselements den Figuren 2 bis 4 entspricht.

In Figur 5 befindet sich die Tellerfeder in ihrer Neutralstellung. Die Tellerfeder übt keine Kraft auf die Reibelemente 51, 52 aus. Die beiden Reibelemente 51, 52 sind durch eine vorgespannte Schraubendruckfeder 55 gegeneinander vorgespannt. Durch Pfeile 58, 59 ist angedeutet, dass die Vorspannkraft der Schraubendruckfeder 55 dazu führt, dass die Reibelemente 51, 52 in axialer Richtung gegen die zugehörige Fläche des Aufnahmeabschnitts 24 gedrückt werden. Das Kopplungselement 26, das teilweise die Gestalt einer Kugel aufweist, ist zwischen zwei Rampen 61, 62 angeordnet. Die beiden Rampen 61, 62 verlaufen parallel zueinander schräg zur Umfangsrichtung und werden jeweils durch eine Nase 63, 64 begrenzt. Die Nasen 63, 64 erstrecken sich im Wesentlichen in axialer Richtung.

In Figur 6 ist das Kopplungselement 26 im ausgelenkten Zustand dargestellt. Die Auslenkung des Kopplungselements 26 erfolgt durch eine Verdrehung der beiden Schwungmassen relativ zueinander. Die Vorspannkraft der Schraubendruckfeder 55 behält ihre Wirkung bei, wie durch die Pfeile 58 und 59 angedeutet ist. Durch einen Pfeil 68 ist angedeutet, dass die von der Tellerfeder über das Kopplungselement 26 auf das Reibelement 51 ausgeübte Kraft zunimmt. Durch die zunehmende Tellerfederkraft 68 wird das Reibelement 51 gegen die zugehörige Innenfläche des Aufnahmeabschnitts 24 gedrückt.

In Figur 7 ist der Zustand dargestellt, in dem das Kopplungselement 26 an der Nase 64 des Reibelements 52 zur Anlage kommt. Das Kopplungselement 26 verschiebt das Reibelement 52 in Umfangsrichtung. Dabei wird die Schraubendruckfeder 55 zusammengedrückt. Demzufolge nimmt die Druckfederkraft zu, wie durch Pfeile 71 bis 74 angedeutet ist. Die Tellerfederkraft nimmt ebenfalls zu, wie durch Pfeile 76 und 77 angedeutet ist.

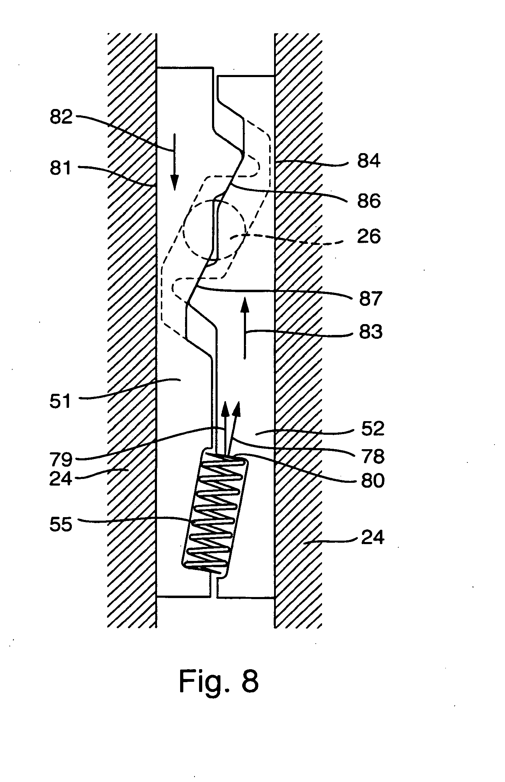

In Figur 8 ist ein weiterer Schnitt in Umfangsrichtung dargestellt. In der Schnittansicht wird verdeutlicht, dass die Schraubendruckfeder 55 zur Neutralisierung von Einbautoleranzen dient. Die Schraubendruckfeder 55 ist schräg zur Umfangsrichtung eingebaut, so dass ihre Federkraft in Richtung eines Pfeils 78 wirkt. Somit hat die Federkraft eine Komponente 79 in Umfangsrichtung und eine Komponente 80 in axialer Richtung. An einer Kontaktstelle 81 ist durch einen Pfeil 82 angedeutet, in welche Richtung das Reibsegment 51 durch die Vorspannkraft der Schraubendruckfeder 55 bewegt wird. Durch einen Pfeil 83 ist angedeutet, in welche Richtung das Reibsegment 52 an einer Kontaktstelle 84 bewegt wird. Wenn die beiden Reibsegmente 51, 52 an den Stellen 86, 87 miteinander in Kontakt kommen, dann wird eine weitere Bewegung der Reibsegmente relativ zueinander verhindert. Dabei bleibt ein kleiner Spalt in axialer Richtung zwischen den beiden Reibsegmenten 51, 52 bestehen. An den Stellen 81 und 84 werden die Reibsegmente 51, 52 aufgrund der Schraubendruckfederkraft gegen den Aufnahmeabschnitt 24 gedrückt. Dadurch wird ein minimales Reibmoment an den Kontaktstellen 81 und 84 erzeugt. Dieses minimale Reibmoment dient zur besseren Ansteuerung der Tellerfederauslenkung.

### Bezugszeichenliste

- 1.: Drehschwingungsdämpfungseinrichtung
- 2.: Primärschwungmasse
- 3.: Lager
- 4.: Sekundärschwungmasse
- 5.: Drehachse
- 6.: Energiespeicher
- 7.: Dämpfungseinrichtung
- 8.: Nietverbindungselement
- 9.: Reiblamellenpaket
- 14.: Kammer
- 15.: Blechteil
- 16.: Kunststoff
- 18.: Bereich
- 19.: Ansatz
- 20.: Anlasserzahnkranz
- 22.: Verbindungselement
- 23.: Blechteil
- 24.: Aufnahmeabschnitt
- 26.: Kopplungselement
- 28.: Tellerfeder
- 31.: Gegenscheibe
- 32.: Gegenscheibe
- 35.: Anschlagabschnitt
- 36.: Anschlagabschnitt
- 38.: Stufennietelement
- 41.: Fliehkraftpendeleinrichtung
- 42.: Fliehkraftkupplungseinrichtung
- 50.: Nietverbindungselement
- 51.: Reibelement
- 52.: Reibelement
- 55.: Schraubendruckfeder
- 58.: Pfeil
- 59.: Pfeil
- 61.: Rampe
- 62.: Rampe
- 63.: Nase
- 64.: Nase
- 68.: Pfeil
- 71.: Pfeil
- 72.: Pfeil
- 73.: Pfeil
- 74.: Pfeil
- 76.: Pfeil
- 77.: Pfeil
- 78.: Pfeil
- 79.: Komponente
- 80.: Komponente
- 81.: Kontaktstelle
- 82.: Pfeil
- 83.: Pfeil
- 84.: Kontaktstelle
- 86.: Kontaktstelle
- 87.: Kontaktstelle

## Patentansprüche

1. Drehschwingungsdämpfungseinrichtung, insbesondere geteiltes Schwungrad, mit einer primären Schwungmasse (2), die drehfest mit der Abtriebswelle einer Antriebseinheit, insbesondere einer Brennkraftmaschine, verbindbar ist, und einer sekundären Schwungmasse (4), die gegen den Widerstand einer ersten Energiespeichereinrichtung (7) und einer zweiten Energiespeichereinrichtung, die eine als Schnappfeder ausgebildete Tellerfedereinrichtung (28) umfasst, die in Abhängigkeit von der Drehzahl und der Drehrichtung der Schwungmassen (2,4) eine zu der ersten Energiespeichereinrichtung (7) inverse Wirkung entfaltet, relativ zu der primären Schwungmasse (2) verdrehbar ist, wobei an der Tellerfedereinrichtung (28) mindestens ein Kopplungselement (26) angebracht ist, das in axialer Richtung zwischen zwei Anlageflächen von Reibelementen (51,52) angeordnet ist, die durch das Kopplungselement (26) in axialer Richtung beaufschlagbar sind,
**dadurch gekennzeichnet, dass**
die Anlageflächen für das Kopplungselement (26) von Rampen (61,62) gebildet werden, die an den Reibelementen (51,52) vorgesehen und, bezogen auf die Umfangsrichtung, schräg angeordnet sind, wobei
die Reibelemente (51,52) durch mindestens eine Federeinrichtung (55) in Umfangsrichtung gegeneinander vorgespannt sind.

2. Drehschwingungsdämpfungseinrichtung nach Ansprüche 1, **dadurch gekennzeichnet, dass** die Anlageflächen für das Kopplungselement (26) in Umfangsrichtung jeweils von einer Nase (63,64) begrenzt werden, die von der zugehörigen Anlagefläche absteht.

3. Drehschwingungsdämpfungseinrichtung nach Anspruch 1 oder 2, **dadurch gekennzeichnet, dass** die resultierende Vorspannkraft der Federeinrichtung (55) eine Wirkungslinie aufweist, die, bezogen auf die Umfangsrichtung, schräg angeordnet ist.

4. Drehschwirigungsdämpfungseinrichturig nach einem der vorhergehenden Ansprüche, **dadurch gekennzeichnet, dass** die Teiterfedereinrichtung (28) mindestens eine Tellerfeder umfasst, an der mehrere Kopplungselemente (26) angebracht sind, die gleichmäßig über den Umfang der Tellerfeder verteilt sind.

5. Drehschwingungsdämpfungseinrichtung nach Anspruch 4, **dadurch gekennzeichnet, dass** jedem Kopplungselement (26) ein Paar Reibelemente zugeordnet ist.

6. Drehschwingungsdämpfungseinrichtung nach Anspruch 4 oder 5, **dadurch gekennzeichnet, dass** die Auslenkung der Tellerfeder (28) in axialer Richtung von zwei Gegenscheiben (31,32) begrenzt ist, die in axialer Richtung voneinander beabstandet sind.

7. Drehschwingungsdämpfungseinrichtung nach einem der vorhergehenden Ansprüche, **dadurch gekennzeichnet, dass** die Reibelemente (51, 52) innerhalb eines Aufnahmeabschnitts (24) angeordnet sind, der an der Primärschwungmasse (2) ausgebildet ist und einen im Wesentlichen U-förmigen Querschnitt aufweist.

8. Drehschwingungsdämpfurgseinrichtung nach einem der vorhergehenden Ansprüche, **dadurch gekennzeichnet, dass** die zweite Energiespelcherelnrichtung so mit den beiden Schwungmassen (2,4) koppelbar ist, dass die zweite Energiespeichereinrichtung nur bei kleinen Verdrehwinkeln, insbesondere von 1 Grad bis 10 Grad, und nicht bei großen Verdrehwinkeln, insbesondere von mehr als 10 Grad, eine degressive Wirkung entfaltet.

## Claims

1. Torsional vibration damping device, in particular split flywheel, with a primary flywheel mass (2) which can be connected in a rotationally fixed manner to the output shaft of a drive unit, in particular of an internal combustion engine, and with a secondary flywheel mass (4) which can be rotated relative to the primary flywheel mass (2) counter to the resistance of a first energy accumulator device (7) and a second energy accumulator device which comprises a plate spring device (28) designed as a snap-action spring which device (28), as a function of the rotational speed and the direction of rotation of the flywheel masses (2, 4), exerts an inverse action to the first energy accumulator device (7), wherein at least one coupling element (26) is mounted on the plate spring device (28) and is arranged in the axial direction between two bearing surfaces of friction elements (51, 52) which can be acted on in the axial direction by the coupling element (26), **characterized in that** the bearing surfaces for the coupling element (26) are formed by ramps (61, 62) which are provided on the friction elements (51, 52) and are arranged obliquely with respect to the circumferential direction, wherein the friction elements (51, 52) are prestressed with respect to one another in the circumferential direction by at least one spring device (55).

2. Torsional vibration damping device according to Claim 1, **characterized in that** the bearing surfaces for the coupling element (26) are in each case delimited in the circumferential direction by a lug (63, 64) which projects from the associated bearing surface.

3. Torsional vibration damping device according to Claim 1 or 2, **characterized in that** the resulting prestressing force of the spring device (55) has an action line which is arranged obliquely with respect to the circumferential direction.

4. Torsional vibration damping device according to one of the preceding claims, **characterized in that** the plate spring device (28) comprises at least one plate spring on which there are mounted a plurality of coupling elements (26) which are distributed uniformly over the circumference of the plate spring.

5. Torsional vibration damping device according to Claim 4, **characterized in that** each coupling element (26) is assigned a pair of friction elements.

6. Torsional vibration damping device according to Claim 4 or 5, **characterized in that** the deflection of the plate spring (28) in the axial direction is limited by two counterdiscs (31, 32) which are spaced apart in the axial direction.

7. Torsional vibration damping device according to one of the preceding claims, **characterized in that** the friction elements (51, 52) are arranged within a receiving portion (24) which is formed on the primary flywheel mass (2) and has a substantially U-shaped cross section.

8. Torsional vibration damping device according to one of the preceding claims, **characterized in that** the second energy accumulator device can be coupled to the two flywheel masses (2, 4) in such a way that the second energy accumulator device exerts a degressive action only in the case of small angles of rotation, in particular of 1 degree to 10 degrees, and not in the case of large angles of rotation, in particular of more than 10 degrees.

## Revendications

1. Amortisseur de vibrations torsionnelles, notamment roue volante divisée, comprenant une masse d'équilibrage primaire (2), qui peut être connectée de manière solidaire en rotation à l'arbre de sortie d'une unité d'entraînement, notamment d'un moteur à combustion interne, et une masse d'équilibrage secondaire (4), qui peut tourner par rapport à la masse d'équilibrage primaire (2) à l'encontre de la résistance d'un premier dispositif accumulateur d'énergie (7) et d'un deuxième dispositif accumulateur d'énergie qui comprend un dispositif de ressort Belleville (28) réalisé sous forme de ressort à déclic, qui produit un effet inverse au premier dispositif accumulateur d'énergie (7) en fonction de la vitesse de rotation et du sens de rotation des masses d'équilibrage (2, 4), au moins un élément d'accouplement (26) étant monté sur le dispositif de ressort Belleville (28), lequel élément d'accouplement est disposé dans la direction axiale entre deux surfaces d'appui d'éléments de friction (51, 52), qui peuvent être sollicitées dans la direction axiale par l'élément d'accouplement (26),
**caractérisé en ce que**
les surfaces d'appui pour l'élément d'accouplement (26) sont formées par des rampes (61, 62) qui sont prévues sur les éléments de friction (51, 52), et qui, par rapport à la direction périphérique, sont disposées obliquement,
les éléments de friction (51, 52) étant précontraints l'un contre l'autre dans la direction périphérique par au moins un dispositif de ressort (55).

2. Amortisseur de vibrations torsionnelles selon la revendication 1, **caractérisé en ce que** les surfaces d'appui pour l'élément d'accouplement (26) sont limitées dans la direction périphérique à chaque fois par un nez (63, 64), qui part de la surface d'appui associée.

3. Amortisseur de vibrations torsionnelles selon la revendication 1 ou 2, **caractérisé en ce que** la force de précontrainte résultante du dispositif de ressort (55) présente une ligne d'action qui est disposée obliquement par rapport à la direction périphérique.

4. Amortisseur de vibrations torsionnelles selon l'une quelconque des revendications précédentes, **caractérisé en ce que** le dispositif de ressort Belleville (28) comprend au moins un ressort Belleville sur lequel sont montés plusieurs éléments d'accouplement (26) qui sont répartis uniformément sur la périphérie du ressort Belleville.

5. Amortisseur de vibrations torsionnelles selon la revendication 4, **caractérisé en ce que** l'on associe à chaque élément d'accouplement (26) une paire d'éléments de friction.

6. Amortisseur de vibrations torsionnelles selon la revendication 4 ou 5, **caractérisé en ce que** la déviation du ressort Belleville (28) dans la direction axiale est limitée par deux disques conjugués (31, 32), qui sont espacés l'un de l'autre dans la direction axiale.

7. Amortisseur de vibrations torsionnelles selon l'une quelconque des revendications précédentes, **caractérisé en ce que** les éléments de friction (51, 52) sont disposés à l'intérieur d'une portion de réception (24) qui est réalisée sur la masse d'équilibrage primaire (2) et qui présente une section transversale essentiellement en forme de U.

8. Amortisseur de vibrations torsionnelles selon l'une quelconque des revendications précédentes, **caractérisé en ce que** le deuxième dispositif accumulateur d'énergie peut être accouplé aux deux masses d'équilibrage (2, 4) de telle sorte que le deuxième dispositif accumulateur d'énergie produise un effet dégressif uniquement en présence de petits angles de rotation, notamment de 1 degré à 10 degrés, et pas pour des angles de rotation importants, notamment de plus de 10 degrés.
